# EUROPEAN PATENT SPECIFICATION

(11) **EP 2 676 808 B1**
(45) Date of publication and mention of the grant of the patent: **04.11.2015**
(21) Application number: 13165477.4
(22) Date of filing: 26.04.2013
(51) Int. Cl.: B60C 3/00, B60C 1/00, B60C 11/00

(54) **Pneumatic tire**
Luftreifen
Pneu

(30) Priority: 21.06.2012 JP 2012139703
(43) Date of publication of application: 25.12.2013
(73) Proprietor: Sumitomo Rubber Industries, Ltd., Kobe-shi, Hyogo 651-0072 (JP)
(72) Inventor: Yoshida, Kenji, Kobe-shi, Hyogo 651-0072, (JP)
(74) Representative: TBK

(56) References cited:
- EP-A2- 1 199 192
- US-A1- 2009 151 845

## Description

### BACKGROUND OF THE INVENTION

### Field of the Invention

The present invention relates to a pneumatic tire.

### Description of the Background Art

In recent years, the weights of vehicles have been further reduced from the standpoint of energy saving or the like. With the weight reduction of vehicles, weight reduction of tires has also been highly demanded. Japanese Laid-Open Patent Publication No. 6-1121 discloses a tire according to the preamble of claim 1, in which a relationship between the rubber hardness and the rubber thickness of each sidewall is specified. In this tire, by causing the rubber hardness and the rubber thickness to have a predetermined relationship, the road hazard resistance is enhanced while the handling performance, the ride comfort, and the like are maintained.

### SUMMARY OF THE INVENTION

In light of reducing the weight of a tire, decreasing the amount of each rubber component constituting the tire is also considered in addition to the framework structure of the tire. For example, decreasing the thickness of a rubber of each sidewall portion contributes to weight reduction of the tire. On the other hand, if the thickness of the rubber of each sidewall portion is excessively decreased, there is a concern that air is entrapped or flow of the rubber is deteriorated in a vulcanizing process. When air is entrapped or flow of the rubber is deteriorated, bareness occurs. The occurrence of the bareness impairs the appearance of the tire.

An object of the present invention is to provide a pneumatic tire that suppresses occurrence of bareness while the thickness of a rubber is decreased, thereby allowing the weight of the tire to be reduced.

According to the present invention, the above object is solved by a pneumatic tire having the features of claim 1.

In the pneumatic tire according to the present invention, the thickness of the rubber of each sidewall can be decreased while occurrence of bareness is suppressed. Thus, the weight of the tire can be reduced.

### BRIEF DESCRIPTION OF THE DRAWINGS

FIG. 1 is a cross-sectional view showing a part of a pneumatic tire according to one embodiment of the present invention;
   FIG. 2 is a partially enlarged cross-sectional view of the tire in FIG. 1; and
   FIG. 3 is another partially enlarged cross-sectional view of the tire in FIG. 1.

### DESCRIPTION OF THE PREFERRED EMBODIMENTS

Hereinafter, the present invention will be described in detail based on preferred embodiments with reference to the accompanying drawings.

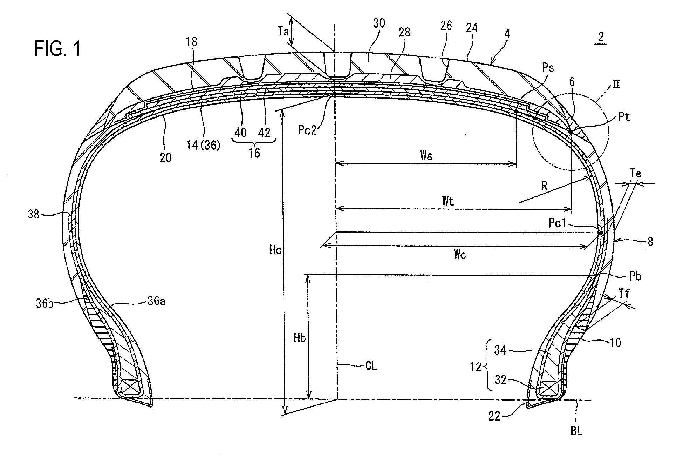

FIG. 1 shows a pneumatic tire 2. In FIG. 1, the up-down direction is a radial direction of the tire 2, the right-left direction is an axial direction of the tire 2, and the direction perpendicular to the surface of the sheet is a circumferential direction of the tire 2. In FIG. 1, an alternate long and short dash line CL represents an equatorial plane of the tire 2. The shape of the tire 2 except a tread pattern is symmetrical about the equatorial plane CL.

The tire 2 includes a tread 4, wings 6, sidewalls 8, clinches 10, beads 12, a carcass 14, a belt 16, a band 18, an inner liner 20, and chafers 22. The tire 2 is of a tubeless type. The tire 2 is mounted to a passenger car.

The tread 4 has a shape that is convex outward in the radial direction. The tread 4 forms a tread surface 24 which comes into contact with a road surface. The tread surface 24 has grooves 26. The tread pattern is formed by the grooves 26. The tread 4 includes a base layer 28 and a cap layer 30. The cap layer 30 is located outward of the base layer 28 in the radial direction. The cap layer 30 is laminated on the base layer 28. The base layer 28 is formed from a crosslinked rubber having an excellent adhesive property. A typical base rubber of the base layer 28 is a natural rubber. The cap layer 30 is formed from a crosslinked rubber that is excellent in wear resistance, heat resistance, and grip performance.

The wings 6 are located at ends of the tread 4 in the axial direction. The wings 6 are positioned between the tread 4 and the sidewalls 8. The wings 6 connect the tread 4 to the sidewalls 8. Each wing 6 is formed from a crosslinked rubber having an excellent adhesive property.

The sidewalls 8 extend from the ends of the tread 4 substantially inward in the radial direction. Outer ends, in the radial direction, of the sidewalls 8 are joined to the tread 4 and the wings 6. Inner ends, in the radial direction, of the sidewalls 8 are joined to the clinches 10. Each sidewall 8 is formed from a crosslinked rubber that is excellent in cut resistance and weather resistance. The sidewalls 8 prevent damage of the carcass 14.

In the tire 2, the tread 4 is positioned outward of the sidewalls 8 in the radial direction. The tire 2 has a so-called tread over sidewall structure (hereinafter, referred to as

TOS structure).

The clinches 10 are located substantially inward of the sidewalls 8 in the radial direction. The clinches 10 are located outward of the beads 12 and the carcass 14 in the axial direction. Each clinch 10 is formed from a crosslinked rubber having excellent wear resistance. The clinches 10 come into contact with flanges of a rim.

The beads 12 are located inward of the clinches 10 in the axial direction. Each bead 12 includes a core 32 and an apex 34 extending from the core 32 outward in the radial direction. The core 32 has a ring shape and includes a wound non-stretchable wire. A typical material of the wire is steel. The apex 34 is tapered outward in the radially direction. The apex 34 is formed from a highly hard crosslinked rubber.

The carcass 14 is formed of a carcass ply 36. The carcass ply 36 extends on and between the beads 12 located on both sides, and extends along the tread 4 and the sidewalls 8. The carcass ply 36 is turned up around each core 32 from the inner side to the outer side in the axial direction. By this turning-up, main portions 36a and turn-up portions 36b are formed in the carcass ply 36. An end 38 of each turn-up portion 36b of the carcass ply 36 is laminated on the main portion 36a in the radial direction. In FIG. 1, an arrow R indicates the radius of curvature of the carcass ply 36.

The carcass ply 36 is composed of aligned multiple cords and a topping rubber. The absolute value of the angle of each cord relative to the equatorial plane CL is 75° to 90°. In other words, the carcass 14 has a radial structure. Each cord is formed from an organic fiber. Examples of preferable organic fibers include polyester fibers, nylon fibers, rayon fibers, polyethylene naphthalate fibers, and aramid fibers. The carcass 14 may be formed of two or more carcass plies.

The belt 16 is located inward of the tread 4 in the radial direction. The belt 16 is laminated together with the carcass 14. The belt 16 reinforces the carcass 14. The belt 16 is composed of an inner layer 40 and an outer layer 42. As is obvious from FIG. 1, the width of the inner layer 40 in the axial direction is slightly larger than that of the outer layer 42. Each of the inner layer 40 and the outer layer 42 is composed of aligned multiple cords and a topping rubber, which is not shown. Each cord is inclined relative to the equatorial plane CL. The absolute value of the inclination angle of each cord is generally not less than 10° and not greater than 35°. The direction in which each cord of the inner layer 40 is inclined relative to the equatorial plane CL is opposite to the direction in which each cord of the outer layer 42 is inclined relative to the equatorial plane CL. A preferable material of each cord is steel. An organic fiber may be used for each cord. The width of the belt 16 in the axial direction is preferably 0.7 times or greater that of the maximum width of the tire 2. The belt 16 may include three or more layers.

The band 18 is located outward of the belt 16 in the radial direction. The width of the band 18 in the axial direction is larger than that of the belt 16. The band 18 is composed of a cord and a topping rubber, which is not shown. The cord is spirally wound. The band 18 has a so-called jointless structure. The cord extends substantially in the circumferential direction. The angle of the cord relative to the circumferential direction is not greater than 5° and further not greater than 2°. The belt 16 is restrained by this cord, and thus lifting of the belt 16 is suppressed. The cord is formed from an organic fiber. Examples of preferable organic fibers include nylon fibers, polyester fibers, rayon fibers, polyethylene naphthalate fibers, and aramid fibers.

The belt 16 and the band 18 constitute a reinforcing layer. The reinforcing layer may be composed of only the belt 16. The reinforcing layer may be composed of only the band 18.

The inner liner 20 is located inward of the carcass 14. The inner liner 20 is joined to the inner surface of the carcass 14 near the equatorial plane CL. The inner liner 20 is formed from a crosslinked rubber. A rubber having an excellent air blocking property is used for the inner liner 20. A typical base rubber of the inner liner 20 is a butyl rubber or a halogenated butyl rubber. The inner liner 20 keeps the internal pressure of the tire 2.

The chafers 22 are located near the beads 12. When the tire 2 is mounted to a rim, the chafers 22 come into contact with the rim. By this contact, the vicinities of the beads 12 are protected. Each chafer 22 may be integrated with the clinch 10. Thus, the material of the chafers 22 may be the same as the material of the clinches 10. Each chafer 22 may be formed from a cloth and a rubber with which the cloth is impregnated.

In FIG. 1, a double-headed arrow Ta indicates the thickness of the rubber of the tread 4 at the equatorial plane CL. The thickness Ta is measured as the distance from the inner surface, in the radial direction, of the base layer 28 to the tread surface 24. A double-headed arrow Te indicates the thickness of the rubber of each sidewall 8 at a position where the width of the tire 2 is at its maximum. A double-headed arrow Tf indicates a thickness of the rubber of each clinch 10. The thickness Tf is measured at a position where the width of the clinch 10 is at its maximum.

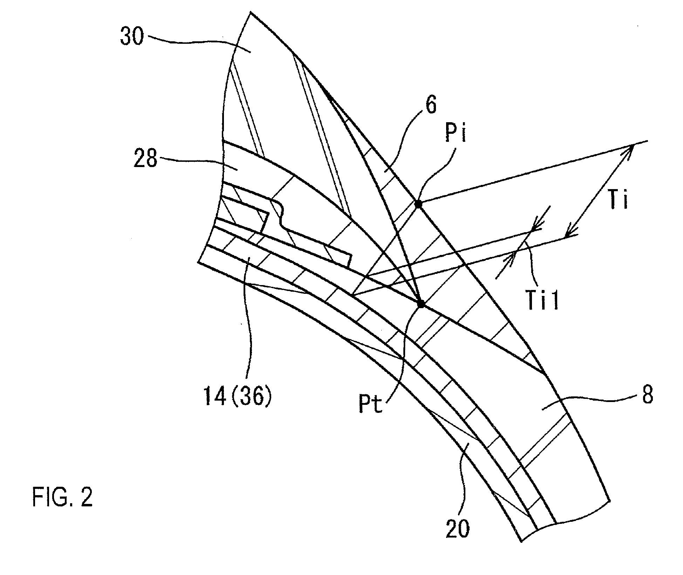

In FIG. 2, a double-headed arrow Ti indicates a rubber thickness at each buttress portion. The thickness Ti is measured at the position of a point Pi described later. In the tire 2, the thickness Ti is measured as a thickness of a portion in which the sidewall 8, the base layer 28, the cap layer 30, and the wing 6 are stacked on each other in order from the inner side toward the outer side. A double-headed arrow Ti1 indicates a thickness of each sidewall 8. The thickness Ti1 is measured at the same point as the point at which the thickness Ti is measured. The point Pi is at a position where a maximum load strain is at its minimum. The thickness Ti and the thicknessTi1 are measured at the position where the maximum load strain is at its minimum.

As shown in FIG. 1, the rubber thickness Ta of the tread 4, the rubber thickness Te of each sidewall 8, the rubber thickness Tf of each clinch 10, the rubber thickness Ti at each buttress portion, and the thickness Ti1 of each sidewall 8 are measured on a cross-section of the tire 2 that has been cut.

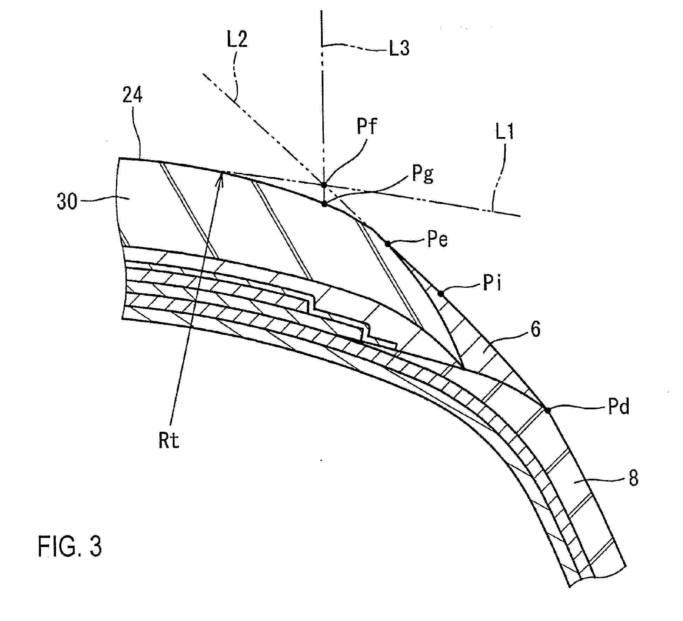

In FIG. 3, a point Pd indicates a position on the boundary between the wing 6 and the sidewall 8. A boundary point Pe indicates a position on the boundary between the wing 6 and the tread 4 (the cap layer 30). These points Pd and Pe are located on the surface of the tire 2. An alternate long and two short dashes line L1 indicates a trajectory having the radius of curvature Rt of the tread surface 24 on the cross-section. An alternate long and two short dashes line L2 is a tangent line that is tangent to the surface of the tire 2 at the point Pe. A point Pf is an intersection between the alternate long and two short dashes line L1 and the alternate long and two short dashes line L2. An alternate long and two short dashes line L3 is a straight line extending through the point Pf in the radial direction. A point Pg is an intersection between the straight line L3 and the surface of the tire 2. The point Pi is a midpoint between the point Pd and the point Pg. The point Pi is a midpoint of the distance therebetween measured along the surface of the tire 2.

In FIG. 1, a point Pc1 indicates a point on the inner surface of the carcass 14 where the width of the tire 2 is at its maximum. A double-headed arrow Wc indicates the width in the axial direction from the equatorial plane CL to the point Pc1. A point Pt indicates an outer end, in the axial direction, of the tread 4. A double-headed arrow Wt indicates the width in the axial direction from the equatorial plane CL to the point Pt. A point Ps indicates the inner end, in the axial direction, of each sidewall 8. The inner end Ps in the axial direction is located between the carcass 14 and the belt 16. A double-headed arrow Ws indicates the width in the axial direction from the equatorial plane CL to the point Ps. The widths Wc, Wt, and Ws are measured as distances in the axial direction of the tire 2.

In FIG. 1, an alternate long and short dash line BL indicates a bead base line of the tire 2. A point Pc2 indicates an intersection between the equatorial plane CL and the inner surface of the carcass 14. A double-headed arrow Hc indicates the height in the radial direction from the bead base line BL to the point Pc2. In other words, the height Hc indicates the height at the equatorial plane CL from the bead base line BL to the carcass 14. A point Pd indicates the outer end, in the radial direction, of each apex 34. A double-headed arrow Hb indicates the distance in the radial direction from the bead base line BL to the point Pd. In other words, the height Hb indicates the height from the bead base line BL to the outer end Pb, in the radial direction, of the apex 34.

In the tire 2, the loss tangent tanδc of the crosslinked rubber of the cap layer 30 of the tread 4 is set so as to be not less than 0.10 and not greater than 0.30. The complex elastic modulus E*c of the crosslinked rubber of the cap layer 30 is set so as to be not less than 5.5 MPa and not greater than 11.5 MPa. The loss tangent tanδb of the crosslinked rubber of each base layer 28 is set so as to be not less than 0.03 and not greater than 0.18. The complex elastic modulus E*b of the crosslinked rubber of each base layer 28 is set so as to be not less than 0.9 MPa and not greater than 4.9 MPa. In the tire 2, the loss tangent tanδb is set so as to be less than the loss tangent tanδc. The complex elastic modulus E*b is set so as to be less than the complex elastic modulus E*c. Thus, in the tire 2, the rolling resistance is reduced while wear resistance and grip performance are ensured by the cap layer 30. In the tire 2, the base layer 28 having a low heat build-up property is disposed below the cap layer 30, thereby reducing the fuel consumption and improving the heat build-up durability.

The loss tangent tanδs of the crosslinked rubber of each sidewall 8 is set so as to be not less than 0.05 and not greater than 0.30. The complex elastic modulus E*s of the crosslinked rubber of each sidewall 8 is set so as to be not less than 1.5 MPa and not greater than 5.5 MPa. The tire 2 that includes the sidewalls 8 has a low heat build-up property. The tire 2 has low fuel consumption. In the tire 2 that includes the sidewalls 8, the handling stability and the ride comfort are improved.

Furthermore, in the tire 2, each wing 6 is located at each buttress portion. The loss tangent tanδw of the crosslinked rubber of each wing 6 is set so as to be not less than 0.04 and not greater than 0.34. The complex elastic modulus E*w of the crosslinked rubber of each wing 6 is set so as to be not less than 1.4 MPa and not greater than 5.4 MPa. Since each wing 6 is located at each buttress portion, occurrence of a minute crack in the circumferential direction at each buttress portion is suppressed.

In the tire 2 in which the ratio Te/Ta of the rubber thickness Te of each sidewall 8 to the rubber thickness Ta of the tread 4 is low, the radius of curvature R is increased at each buttress portion. In the tire 2 in which the radius of curvature R is increased, the rolling resistance is decreased. In this respect, the ratio Te/Ta is set so as to be not greater than 0.28. The ratio Te/Ta is preferably not greater than 0.25 and further preferably not greater than 0.22. On the other hand, in the tire 2 in which the ratio Te/Ta is high, occurrence of bareness is suppressed. In this tire, the durability is improved. In this respect, the ratio Te/Ta is set so as to be not less than 0.12. The ratio Te/Ta is preferably not less than 0.15 and further preferably not less than 0.18.

In the tire 2 in which the ratio Te/Tf of the rubber thickness Te of each sidewall 8 to the rubber thickness Tf of each clinch 10 is low, the radius of curvature R is increased at each bead portion. Thus, the rolling resistance is decreased. In this respect, the ratio Te/Tf is set so as to be not greater than 0.65. The ratio Te/Tf is further preferably not greater than 0.60 and particularly preferably not greater than 0.55. On the other hand, in the tire 2 in which the ratio Te/Tf is high, occurrence of bareness is suppressed. In this tire, the durability is improved. In this respect, the ratio Te/Tf is set so as to be not less than 0.35. The ratio Te/Tf is preferably not less than 0.4 and further preferably not less than 0.45.

In the tire 2 in which the ratio Te/Ti of the rubber thickness Te of each sidewall 8 to the thickness Ti of the rubbers at each buttress portion is low, the radius of curvature R is increased at each buttress portion. Thus, the rolling resistance is decreased. In this respect, the ratio Te/Ti is preferably not greater than 0.37, further preferably not greater than 0.33, and particularly preferably not greater than 0.29. On the other hand, in the tire 2 in which the ratio Te/Ti is high, occurrence of bareness is suppressed. In this tire, the durability is improved. In this respect, the ratio Te/Ti is preferably not less than 0.17, further preferably not less than 0.21, and particularly preferably not less than 0.25.

If the ratio Ti/Tf of the thickness Ti of the rubbers at each buttress portion to the rubber thickness Tf of each clinch 10 is excessively high, the radius of curvature R is difficult to become uniform in a range from the tread 4 to each clinch 10. In this respect, the ratio Ti/Tf is preferably not greater than 2.35, further preferably not greater than 2.15, and particularly preferably not greater than 1.95. On the other hand, even if the ratio Ti/Tf is excessively low, the radius of curvature R is difficult to become uniform. In this respect, the ratio Ti/Tf is preferably not less than 1.35, further preferably not less than 1.55, and particularly preferably not less than 1.75.

In the tire 2 in which the ratio Ti/Ti1 of the thickness Ti of the rubbers at each buttress portion to the thickness Ti1 of the rubber of each sidewall 8 at each buttress portion is high, the rolling resistance is decreased. In this respect, the ratio Ti/Ti1 is preferably not less than 2.8, further preferably not less than 3.2, and particularly preferably not less than 3.7. In addition, an end portion of each sidewall 8 that is located inward of the belt 16 in the radial direction functions as a cushion for the belt 16. In the tire 2 in which the ratio Ti/Ti1 is low, the end portion of each sidewall 8 becomes thin. Thus, the function of the end portion of each sidewall 8 as a cushion is deteriorated. In this respect, the ratio Ti/Ti1 is preferably not greater than 5.2, further preferably not greater than 4.7, and particularly preferably not greater than 4.2.

The tire 2 in which the ratio Hb/Hc of the height Hb to the outer end, in the radial direction, of each apex 34 to the height Hc to the carcass 14 is high has excellent stiffness. The tire 2 has excellent steering stability. In this respect, the ratio Hb/Hc is preferably not less than 0.28. The ratio Hb/Hc is further preferably not less than 0.33 and particularly preferably not less than 0.38. On the other hand, the tire 2 in which the ratio Hb/Hc is low has a low rolling resistance. In this respect, the ratio Hb/Hc is preferably not greater than 0.58. The ratio Hb/Hc is further preferably not greater than 0.53 and particularly preferably not greater than 0.48.

In the tire 2 in which the ratio Ws/Wc of the width Ws from the equatorial plane CL to the inner end of each sidewall 8 to the maximum width Wc of the carcass 14 is high, the protection effect by the belt 16 is great. The tire 2 has excellent durability. In this respect, the ratio Ws/Wc is preferably set so as to be not less than 0.41. The ratio Ws/Wc is further preferably not less than 0.46 and particularly preferably not less than 0.51. On the other hand, in the tire 2 in which the ratio Ws/Wc is low, the radius of curvature R is increased at each buttress portion. The rolling resistance of the tire 2 is decreased. In this respect, the ratio Ws/Wc is preferably set so as to be not greater than 0.71. The ratio Ws/Wc is further preferably not greater than 0.66 and particularly preferably not greater than 0.61.

In the tire 2 in which the ratio Wt/Wc of the width Wt from the equatorial plane CL to the outer end, in the axial direction, of the tread 4 to the maximum width Wc of the carcass 14 is high, the width of the belt 16 in the axial direction is increased. The rolling resistance of the tire 2 is decreased due to the belt 16 being restrained. In this respect, the ratio Wt/Wc is preferably set so as to be not less than 0.7. The ratio Wt/Wc is further preferably not less than 0.75 and particularly preferably not less than 0.8. On the other hand, in the tire 2 in which the ratio Wt/Wc is low, occurrence of an SFC (a minute crack in the circumferential direction) at each buttress portion is suppressed. In this respect, the ratio Wt/Wc is preferably set so as to be not greater than 1.0. The ratio Wt/Wc is further preferably not greater than 0.95 and particularly preferably not greater than 0.9.

Since the crosslinked rubbers of the tread 4, each wing 6, and each sidewall 8 that have the loss tangents tanδ and the complex elastic moduli E* as described above are used, the tire 2 that has a low heat build-up property and is suitable for energy saving is obtained. Since these crosslinked rubbers are used and the thicknesses Ta, Te, and Tf of the rubbers of the respective components are set at the predetermined thicknesses described above, a profile having a substantially uniform radius of curvature R is obtained at each sidewall 8 extending from the end of the tread 4 to each clinch 10. In the tire 2, a profile having a uniform radius of curvature R can be obtained by decreasing the thicknesses of the rubbers of the respective components. Furthermore, since the thicknesses Ti and Ti1 are set at the predetermined thicknesses described above, a profile having a substantially uniform radius of curvature R is also obtained at each sidewall 8. In the tire 2, occurrence of a local strain is suppressed. Thus, the tire 2 has excellent durability.

In addition, in the tire 2, since the above-described crosslinked rubbers of the tread 4, each wing 6, and each sidewall 8 are used and the thicknesses Ta, Te, Tf, and Ti are set at the predetermined thicknesses described above, occurrence of bareness is suppressed.

Since the tire 2 has excellent durability and occurrence of bareness is suppressed in the tire 2, the thickness Te of the rubber of each sidewall 8 can be set so as to be small as compared to conventional tires. In the tire 2, in light of weight reduction, the thickness Te is preferably not greater than 3 mm and further preferably not greater than 2.5 mm. On the other hand, in light of durability of the tire 2 and suppression of occurrence of bareness in the tire 2, the thickness Te is preferably not less than 1 mm and further preferably not less than 1.5 mm.

In the present specification, a normal rim means a rim specified in a standard on which the tire 2 is based. The "standard rim" in the JATMA standard, the "Design Rim" in the TRA standard, and the "Measuring Rim" in the ETRTO standard are normal rims. In the present specification, a normal internal pressure means an internal pressure specified in the standard on which the tire 2 is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

### EXAMPLES

Hereinafter, effects of the present invention will become apparent according to examples. However, the present invention should not be restrictively construed based on the description of examples.

### [Comparative Example 1]

A conventional commercially-available tire was prepared. The size of this tire is "175/65R14 82T". The thickness Ta of the rubber of the tread of this tire at a center thereof, the thickness Ti of the rubbers at each buttress portion, the thickness Ti1, the thickness Te of the rubber of each sidewall, and the thickness Tf of the rubber of each clinch were 10.2 mm, 7.9 mm, 2.8 mm, 3.0 mm, and 4.5 mm, respectively. The complex elastic modulus E* and the loss tangent tanδ of each rubber were as shown in Table 1. In addition, the ratios Te/Ta, Te/Ti, Te/Tf, Ti/Tf, Ti/Ti1, Hb/Hc, Ws/Wc, and Wt/Wc were as shown in Table 1.

### [Example 1]

A tire having the structure shown in FIG. 1 was obtained. The size of this tire is also "175/65R14 82T". The thickness Ta of the rubber of the tread of this tire at a center thereof, the thickness Ti of the rubber at each buttress portion, the thickness Ti1, the thickness Te of the rubber of each sidewall, and the thickness Tf of the rubber of each clinch were 10 mm, 7.3 mm, 1.8 mm, 2.0 mm, and 4.0 mm, respectively. The complex elastic modulus E* and the loss tangent tanδ of each rubber were as shown in Table 1. In addition, the ratios Te/Ta, Te/Ti, Te/Tf, Ti/Tf, Ti/Ti1, Hb/Hc, Ws/Wc, and Wt/Wc were as shown in Table 1.

### [Comparative Example 2]

A tire of Comparative Example 2 was the same as that of Example 1 except that the thickness Ti of the rubbers at each buttress portion, the thickness Ti1, the thickness Te of the rubber of each sidewall, and the thickness Tf of the rubber of each clinch were set at 7.9 mm, 2.8 mm, 1.5 mm, and 5.5 mm, respectively. The ratios Te/Ta, Te/Ti, Te/Tf, Ti/Tf, Ti/Ti1, Hb/Hc, Ws/Wc, and Wt/Wc of this tire were as shown in Table 1.

### [Comparative Example 3]

A tire was obtained in the same manner as Example 1 except that no wing was provided and the ratio Wt/Wc was set as shown in Table 1.

### [Examples 2 and 3 and Comparative Examples 4 and 5]

Tires were obtained in the same manner as Example 1 except that the ratio Te/Ta was set as shown in Table 2.

### [Examples 4 to 7]

Tires were obtained in the same manner as Example 1 except that the ratio Te/Ti was set as shown in Table 2.

### [Examples 8 and 9 and Comparative Examples 6 and 7]

Tires were obtained in the same manner as Example 1 except that the ratio Te/Tf was set as shown in Table 3.

### [Examples 10 to 13]

Tires were obtained in the same manner as Example 1 except that the ratio Ti/Tf was set as shown in Table 3.

### [Examples 14 to 17]

Tires were obtained in the same manner as Example 1 except that the ratio Ti/Ti1 was set as shown in Table 4.

### [Examples 18 to 21]

Tires were obtained in the same manner as Example 1 except that the ratio Hb/Hc of the height Hc from the bead base line to the carcass to the height Hb to the outer end, in the radial direction, of each apex was set as shown in Table 4.

### [Examples 22 to 25]

Tires were obtained in the same manner as Example 1 except that the ratio Ws/Wc of the width Ws from the equatorial plane to the inner end of each sidewall to the maximum width Wc of the carcass was set as shown in Table 5.

### [Examples 26 to 28]

Tires were obtained in the same manner as Example 1 except that the ratio Wt/Wc of the width Wt from the equatorial plane to each outer end, in the axial direction, of the tread to the maximum width Wc of the carcass was set as shown in Table 5.

### [RRC evaluation]

Each tire was inflated to a normal internal pressure, and a rolling resistance coefficient (25°C) was measured according to the measuring method of ISO18164. The value is shown in the row of RRC in Tables 1 to 5. The smaller the value is, the more excellent the rolling resistance property is, namely, the lower the rolling resistance is.

### [Bareness evaluation]

The appearance of each tire was inspected. Presence/absence of flaws caused by air entrapment or deterioration of rubber flow in a vulcanizing process was visually inspected. The results are shown in Tables 1 to 5 below.

### [SFC evaluation]

Each tire was mounted to a normal rim and inflated to an internal pressure of 200 kPa. Each tire was put into an ozone chamber at a temperature of 40°C and an ozone concentration of 50 PPhm and kept for 14 days. Then, it was observed whether any crack had occurred at each buttress portion. The results are shown in Tables 1 to 5 below.

### [Durability]

Each tire was mounted to a drum type tire testing machine, and a durability test was conducted under the test conditions of FMVSS 139. The results are shown in Tables 1 to 5 below.

[Table 1]

**Table 1 Results of Evaluation**

| | | Comp. Ex. 1 | Ex. 1 | Comp. Ex. 2 | Comp. Ex. 3 |
|---|---|---|---|---|---|
| Tread cap layer | E*c [MPa] | 10.7 | 8.5 | 8.5 | 8.5 |
| | tanδc | 0.28 | 0.2 | 0.2 | 0.2 |
| Tread base layer | E*b [MPa] | 2.9 | 2.9 | 2.9 | 2.9 |
| | tanδb | 0.08 | 0.08 | 0.08 | 0.08 |
| Wing | E*w [MPa] | 3.4 | 3.4 | 3.4 | - |
| | tanδw | 0.14 | 0.14 | 0.14 | - |
| Sidewall | E*s [MPa] | 3.5 | 3.5 | 3.5 | 3.5 |
| | tanδs | 0.10 | 0.10 | 0.10 | 0.10 |
| Te/Ta | | 0.29 | 0.2 | 0.15 | 0.2 |
| Te/Ti | | 0.38 | 0.27 | 0.19 | 0.27 |
| Te/Tf | | 0.44 | 0.5 | 0.27 | 0.5 |
| Ti/Tf | | 1.16 | 1.8 | 1.42 | 1.8 |
| Ti/Ti1 | | 2.8 | 4.0 | 2.8 | 4.0 |
| Hb/Hc | | 0.45 | 0.43 | 0.43 | 0.43 |
| Ws/Wc | | 0.56 | 0.56 | 0.56 | 0.56 |
| Wt/Wc | | 0.9 | 0.9 | 0.9 | 0.98 |
| RRC | | 9.6 | 8.3 | 9.1 | 8.3 |
| Bareness | | Favorable | Favorable | Unfavorable | Favorable |
| SFC | | Favorable | Favorable | Favorable | Unfavorable |
| Durability | | Favorable | Favorable | Favorable | Favorable |

[Table 2]

**Table 2 Results of Evaluation**

| | Comp. Ex. 4 | Ex. 2 | Ex. 3 | Comp. Ex. 5 | Ex. 6 | Ex. 4 | Ex. 5 | Ex. 7 |
|---|---|---|---|---|---|---|---|---|
| Te/Ta | 0.10 | 0.12 | 0.28 | 0.30 | 0.2 | 0.2 | 0.2 | 0.2 |
| Te/Ti | 0.27 | 0.27 | 0.27 | 0.27 | 0.15 | 0.17 | 0.37 | 0.40 |
| Te/Tf | 0.5 | 0.5 | 0.5 | 0.5 | 0.5 | 0.5 | 0.5 | 0.5 |
| Ti/Tf | 1.8 | 1.8 | 1.8 | 1.8 | 1.8 | 1.8 | 1.8 | 1.8 |
| Ti/Ti1 | 4.0 | 4.0 | 4.0 | 4.0 | 4.0 | 4.0 | 4.0 | 4.0 |
| Hb/Hc | 0.43 | 0.43 | 0.43 | 0.43 | 0.43 | 0.43 | 0.43 | 0.43 |
| Ws/Wc | 0.56 | 0.56 | 0.56 | 0.56 | 0.56 | 0.56 | 0.56 | 0.56 |
| Wt/Wc | 0.9 | 0.9 | 0.9 | 0.9 | 0.9 | 0.9 | 0.9 | 0.9 |
| RRC | 7.8 | 8.0 | 8.9 | 9.2 | 8.0 | 8.1 | 8.6 | 8.8 |
| Bareness | Unfavorable | Favorable | Favorable | Favorable | Favorable | Favorable | Favorable | Favorable |
| SFC | Favorable | Favorable | Favorable | Favorable | Favorable | Favorable | Favorable | Favorable |
| Durability | Unfavorable | Favorable | Favorable | Favorable | Favorable | Favorable | Favorable | Favorable |

[Table 3]

**Table 3 Results of Evaluation**

| | Comp. Ex. 6 | Ex. 8 | Ex. 9 | Comp. Ex. 7 | Ex. 12 | Ex. 10 | Ex. 11 | Ex. 13 |
|---|---|---|---|---|---|---|---|---|
| Te/Ta | 0.2 | 0.2 | 0.2 | 0.2 | 0.2 | 0.2 | 0.2 | 0.2 |
| Te/Ti | 0.27 | 0.27 | 0.27 | 0.27 | 0.27 | 0.27 | 0.27 | 0.27 |
| Te/Tf | 0.30 | 0.35 | 0.65 | 0.70 | 0.5 | 0.5 | 0.5 | 0.5 |
| Ti/Tf | 1.8 | 1.8 | 1.8 | 1.8 | 1.30 | 1.35 | 2.35 | 2.40 |
| Ti/Ti1 | 4.0 | 4.0 | 4.0 | 4.0 | 4.0 | 4.0 | 4.0 | 4.0 |
| Hb/Hc | 0.43 | 0.43 | 0.43 | 0.43 | 0.43 | 0.43 | 0.43 | 0.43 |
| Ws/Wc | 0.56 | 0.56 | 0.56 | 0.56 | 0.56 | 0.56 | 0.56 | 0.56 |
| Wt/Wc | 0.9 | 0.9 | 0.9 | 0.9 | 0.9 | 0.9 | 0.9 | 0.9 |
| RRC | 8.0 | 8.1 | 8.9 | 9.2 | 8.7 | 8.7 | 8.7 | 8.8 |
| Bareness | Unfavorable | Favorable | Favorable | Favorable | Favorable | Favorable | Favorable | Favorable |
| SFC | Favorable | Favorable | Favorable | Favorable | Favorable | Favorable | Favorable | Favorable |
| Durability | Unfavorable | Favorable | Favorable | Favorable | Favorable | Favorable | Favorable | Favorable |

[Table 4]

**Table 4 Results of Evaluation**

| | Ex. 16 | Ex. 14 | Ex. 15 | Ex. 17 | Ex. 20 | Ex. 18 | Ex. 19 | Ex. 21 |
|---|---|---|---|---|---|---|---|---|
| Te/Ta | 0.2 | 0.2 | 0.2 | 0.2 | 0.2 | 0.2 | 0.2 | 0.2 |
| Te/Ti | 0.27 | 0.27 | 0.27 | 0.27 | 0.27 | 0.27 | 0.27 | 0.27 |
| Te/Tf | 0.5 | 0.5 | 0.5 | 0.5 | 0.5 | 0.5 | 0.5 | 0.5 |
| Ti/Tf | 1.8 | 1.8 | 1.8 | 1.8 | 1.8 | 1.8 | 1.8 | 1.8 |
| Ti/Ti1 | 2.5 | 2.8 | 5.2 | 5.5 | 4.0 | 4.0 | 4.0 | 4.0 |
| Hb/Hc | 0.43 | 0.43 | 0.43 | 0.43 | 0.25 | 0.28 | 0.58 | 0.60 |
| Ws/Wc | 0.56 | 0.56 | 0.56 | 0.56 | 0.56 | 0.56 | 0.56 | 0.56 |
| Wt/Wc | 0.9 | 0.9 | 0.9 | 0.9 | 0.9 | 0.9 | 0.9 | 0.9 |
| RRC | 8.7 | 8.6 | 8.2 | 8.1 | 8.2 | 8.2 | 8.4 | 8.4 |
| Bareness | Favorable | Favorable | Favorable | Favorable | Favorable | Favorable | Favorable | Favorable |
| SFC | Favorable | Favorable | Favorable | Favorable | Favorable | Favorable | Favorable | Favorable |
| Durability | Favorable | Favorable | Favorable | Favorable | Favorable | Favorable | Favorable | Favorable |

[Table 5]

**Table 5 Results of Evaluation**

| | Ex. 24 | Ex. 22 | Ex.23 | Ex. 25 | Ex. 28 | Ex.26 | Ex. 27 |
|---|---|---|---|---|---|---|---|
| Te/Ta | 0.2 | 0.2 | 0.2 | 0.2 | 0.2 | 0.2 | 0.2 |
| Te/Ti | 0.27 | 0.27 | 0.27 | 0.27 | 0.27 | 0.27 | 0.27 |
| Te/Tf | 0.5 | 0.5 | 0.5 | 0.5 | 0.5 | 0.5 | 0.5 |
| Ti/Tf | 1.8 | 1.8 | 1.8 | 1.8 | 1.8 | 1.8 | 1.8 |
| Ti/Ti1 | 4.0 | 4.0 | 4.0 | 4.0 | 4.0 | 4.0 | 4.0 |
| Hb/Hc | 0.43 | 0.43 | 0.43 | 0.43 | 0.43 | 0.43 | 0.43 |
| Ws/Wc | 0.35 | 0.41 | 0.71 | 0.75 | 0.56 | 0.56 | 0.56 |
| Wt/Wc | 0.9 | 0.9 | 0.9 | 0.9 | 0.6 | 0.7 | 1.0 |
| RRC | 8.2 | 8.2 | 8.5 | 8.5 | 8.5 | 8.4 | 8.2 |
| Bareness | Favorable | Favorable | Favorable | Favorable | Favorable | Favorable | Favorable |
| SFC | Favorable | Favorable | Favorable | Favorable | Favorable | Favorable | Favorable |
| Durability | Favorable | Favorable | Favorable | Favorable | Favorable | Favorable | Favorable |

As shown in Tables 1 to 5, the evaluation of the tires of Examples is higher than that of the tires of Comparative Examples. From the results of evaluation, advantages of the present invention are clear.

The pneumatic tire described above is applicable to various vehicles.

In a pneumatic tire 2, a ratio Te/Ta of a thickness Te of a rubber of each sidewall 8 at a position where a width of the tire is at its maximum to a thickness Ta of a rubber of a tread 4 at a center thereof is not less than 0.12 and not greater than 0.28. A ratio Te/Tf of the thickness Te to a thickness Tf of a rubber of each clinch 10 is not less than 0.35 and not greater than 0.65. Preferably, a ratio Te/Ti of the thickness Te to a thickness Ti of rubbers at each buttress portion is not less than 0.17 and not greater than 0.37. A ratio Ti/Ti1 of the thickness Ti to a thickness Ti1 of the crosslinked rubber of each sidewall 8 at the thickness Ti is not less than 2.8 and not greater than 5.2. A ratio Ti/Tf of the thickness Ti to the thickness Tf is not less than 1.35 and not greater than 2.35.

## Claims

1. A pneumatic tire (2) comprising:
a tread (4);
a pair of wings (6) located at ends of the tread in an axial direction;
a pair of sidewalls (8) extending from the ends of the tread and the wings substantially inward in a radial direction;
a pair of beads (12) located inward of the sidewalls in the radial direction;
a carcass (14) extending on and between one of the beads and the other bead along and inward of the tread and the sidewalls;
**characterized by**
clinches (10) located outward of the beads in the axial direction, wherein
the tread includes a base layer (28) and a cap layer (30) located outward of the base layer in the radial direction,
each sidewall, the base layer, the cap layer, and each wing are stacked at each buttress portion in order from an inner side toward an outer side,
a complex elastic modulus E*c of a crosslinked rubber of the cap layer is not less than 5.5 MPa and not greater than 11.5 MPa,
a loss tangent tanδc of the crosslinked rubber of the cap layer is not less than 0.1 and not greater than 0.3,
a complex elastic modulus E*b of a crosslinked rubber of the base layer is not less than 0.9 MPa and not greater than 4.9 MPa,
a loss tangent tanδb of the crosslinked rubber of the base layer is not less than 0.03 and not greater than 0.18,
a complex elastic modulus E*w of a crosslinked rubber of each wing is not less than 1.4 MPa and not greater than 5.4 MPa,
a loss tangent tanδw of the crosslinked rubber of each wing is not less than 0.04 and not greater than 0.34,
a complex elastic modulus E*s of a crosslinked rubber of each sidewall is not less than 1.5 MPa and not greater than 5.5 MPa,
a loss tangent tanδs of the crosslinked rubber of each sidewall is not less than 0.05 and not greater than 0.30,
a ratio Te/Ta of a thickness Te of the rubber of each sidewall at a position where a width of the tire is at its maximum to a thickness Ta of the rubber of the tread at a center thereof is not less than 0.12 and not greater than 0.28, and
a ratio Te/Tf of the thickness Te to a thickness Tf of a rubber of each clinch is not less than 0.35 and not greater than 0.65.

2. The pneumatic tire according to claim 1, wherein
a ratio Te/Ti of the thickness Te to a thickness Ti of the rubbers at each buttress portion is not less than 0.17 and not greater than 0.37,
a ratio Ti/Ti1 of the thickness Ti to a thickness Ti1 of the crosslinked rubber of each sidewall at the thickness Ti is not less than 2.8 and not greater than 5.2, and
a ratio Ti/Tf of the thickness Ti to the thickness Tf is not less than 1.35 and not greater than 2.35.

3. The pneumatic tire according to claim 1 or 2, wherein
a belt (16) is laminated outward of the carcass in the radial direction,
an inner end (Ps), in the axial direction, of each sidewall is located between the belt and the carcass,
each bead includes a core (32) and an apex (34) extending from the core outward in the radial direction,
a ratio Hb/Hc of a height Hb from a bead base line (BL) to an outer end (Pb), in the radial direction, of each apex to a height Hc at an equatorial plane (CL) from the bead base line to the carcass is not less than 0.28 and not greater than 0.58,
a ratio Ws/Wc of a width Ws from the equatorial plane to the inner end of each sidewall to a maximum width Wc of the carcass is not less than 0.41 and not greater than 0.71, and
a ratio Wt/Wc of a width Wt from the equatorial plane to each outer end (Pt), in the axial direction, of the tread to the maximum width Wc of the carcass is not less than 0.7 and not greater than 1.0.

4. The pneumatic tire according to any one of claims 1 to 3, wherein the thickness Te is not less than 1.0 mm and not greater than 3.0 mm.

## Patentansprüche

1. Luftreifen (2) mit:
einer Lauffläche (4);
einem Paar Schulterstreifen (6), die sich an Enden der Lauffläche in einer Achsrichtung befinden;
einem Paar Seitenwänden (8), die sich von den Enden der Lauffläche und der Schulterstreifen in einer Radialrichtung im Wesentlichen einwärts erstrecken;
einem Paar Wulststreifen (12), die sich in der Radialrichtung innerhalb der Seitenwände befinden;
einer Karkasse (14), die sich an und zwischen einem der Wulststreifen und dem anderem Wulststreifen entlang und innerhalb der Lauffläche und der Seitenwände erstreckt;
**gekennzeichnet durch**
Humpstreifen (10), die sich in der Achsrichtung außerhalb der Wulststreifen befinden, wobei
die Lauffläche eine Basisschicht (28) und eine Deckschicht (30), die sich in der Radialrichtung außerhalb der Basisschicht befindet, aufweist,
jede Seitenwand, die Basisschicht, die Deckschicht und jeder Schulterstreifen an Stützabschnitten in der Reihenfolge von einer inneren Seite zu einer äußeren Seite gestapelt sind,
ein komplexer Elastizitätsmodul E*c eines quervernetzten Gummis der Deckschicht nicht weniger als 5,5 MPa und nicht größer 11,5 MPa ist,
der Verlustfaktor tanδc des quervernetzten Gummis der Deckschicht nicht weniger als 0,1 und nicht größer als 0,3 ist,
ein komplexer Elastizitätsmodul E*b eines quervernetzten Gummis der Basisschicht nicht weniger als 0,9 MPa und nicht größer als 4,9 MPa ist,
ein Verlustfaktor tanδb des quervernetzten Gummis der Basisschicht nicht kleiner als 0,03 und nicht größer als 0,18 ist,
ein komplexer Elastizitätsmodul E*w eines quervernetzten Gummis eines jeden Schulterstreifens nicht weniger als 1,4 MPa und nicht größer als 5,4 MPa ist,
ein Verlustfaktor tanδw des quervernetzten Gummis eines jeden Schulterstreifens nicht kleiner als 0,04 und nicht größer als 0,34 ist,
ein komplexer Elastizitätsmodul E*s eines quervernetzten Gummis einer jeden Seitenwand nicht kleiner als 1,5 MPa und nicht größer als 5,5 M Pa ist,
ein Verlustfaktor tanδs des quervernetzten Gummis einer jeden Seitenwand nicht kleiner als 0,05 und nicht größer als 0,30 ist,
ein Verhältnis Te/Ta aus einer Dicke Te des Gummis einer jeden Seitenwand an einer Stelle, an der eine Breite des Reifens maximal ist, zu einer Dicke Ta des Gummis der Lauffläche an deren Mitte nicht kleiner als 0,12 und nicht größer als 0,28 ist, und
ein Verhältnis Te/Tf aus der Dicke Te zu einer Dicke Tf eines Gummis eines jeden Humpstreifens nicht kleiner als 0,35 und nicht größer als 0,65 ist.

2. Luftreifen gemäß Anspruch 1, wobei
ein Verhältnis Te/Ti aus der Dicke Te zu einer Dicke Ti der Gummis an jedem Verstärkungsabschnitt nicht kleiner als 0,17 und nicht größer als 0,37 ist,
ein Verhältnis Ti/Ti1 aus der Dicke Ti zu einer Dicke Ti1 des quervernetzten Gummis einer jeden Seitenwand an der Dicke Ti nicht kleiner als 2,8 und nicht größer als 5,2 ist, und
ein Verhältnis Ti/Tf aus der Dicke Ti zu der Dicke Tf nicht kleiner als 1,35 und nicht größer als 2,35 ist.

3. Luftreifen gemäß Anspruch 1 oder 2, wobei
ein Gurt (16) außerhalb der Karkasse in der Radialrichtung laminiert ist,
ein inneres Ende (Ps) in der Achsrichtung einer jeden Seitenwand sich zwischen dem Gurt und der Karkasse befindet,
jeder Wulststreifen einen Kern (32) und einen Scheitelpunkt (34) hat, der sich von dem Kern in der Radialrichtung auswärts erstreckt,
ein Verhältnis Hb/Hc aus einer Höhe Hb von einer Wulststreifenbasislinie (BL) zu einem äußeren Ende (Pb) in der Radialrichtung eines jeden Scheitelpunkts zu einer Höhe Hc an einer Äquatorebene (CL) von der Wulststreifenbasislinie zu der Karkasse nicht kleiner als 0,28 und nicht größer als 0,58 ist,
ein Verhältnis Ws/Wc aus einer Breite Ws von der Äquatorebene zu dem inneren Ende einer jeden Seitenwand zu einer maximalen Breite Wc der Karkasse nicht kleiner als 0,41 und nicht größer als 0,71 ist, und
ein Verhältnis Wt/Wc aus einer Breite Wt von der Äquatorebene zu jedem äußeren Ende (Pt) in der Achsrichtung der Lauffläche zu der maximalen Breite Wc der Karkasse nicht kleiner als 0,7 und nicht größer als 1,0 ist.

4. Luftreifen gemäß einem der Ansprüche 1 bis 3, wobei die Dicke Te nicht kleiner als 1,0 mm und nicht größer als 3,0 mm ist.

## Revendications

1. Pneu (2) comprenant :
une bande de roulement (4) ;
une paire d'ailes (6) situées aux extrémités de la bande de roulement dans une direction axiale ;
une paire de parois latérales (8) s'étendant à partir des extrémités de la bande de roulement et les ailes substantiellement vers l'intérieur dans une direction radiale ;
une paire de talons (12) situés à l'intérieur des parois latérales dans la direction radiale ;
une carcasse (14) s'étendant sur et entre l'un des talons et l'autre talon le long et à l'intérieur de la bande de roulement et des parois latérales ;
**caractérisé par**
des coussins de jante (10) situés à l'extérieur des talons dans la direction axiale,
dans lequel
la bande de roulement comporte une couche de base (28) et une couche de couverture (30) située à l'extérieur de la couche de base dans la direction radiale,
chaque paroi latérale, la couche de base, la couche de couverture, et chaque aile sont empilées au niveau de chaque partie de contrefort dans l'ordre à partir d'un côté intérieur vers un côté extérieur,
un module d'élasticité complexe E*c d'un caoutchouc réticulé de la couche de couverture est supérieur ou égal à 5,5 MPa et inférieur ou égal à 11,5 MPa,
une tangente de l'angle de pertes tanδc du caoutchouc réticulé de la couche de couverture est supérieure ou égale à 0,1 et inférieure ou égale à 0,3,
un module d'élasticité complexe E*b d'un caoutchouc réticulé de la couche de base est supérieur ou égal à 0,9 MPa et inférieur ou égal à 4,9 MPa,
une tangente de l'angle de pertes tanδb du caoutchouc réticulé de la couche de base est supérieure ou égale à 0,03 et inférieure ou égale à 0,18,
un module d'élasticité complexe E*w d'un caoutchouc réticulé de chaque aile est supérieur ou égal à 1,4 MPa et inférieur ou égal à 5,4 MPa,
une tangente de l'angle de pertes tanδw du caoutchouc réticulé de chaque aile est supérieure ou égale à 0,04 et inférieure ou égale à 0,34,
un module d'élasticité complexe E*s d'un caoutchouc réticulé de chaque paroi latérale est supérieur ou égal à 1,5 MPa et inférieur ou égal à 5,5 MPa,
une tangente de l'angle de pertes tanδs du caoutchouc réticulé de chaque paroi latérale est supérieure ou égale à 0,05 et inférieure ou égale à 0,30,
un rapport Te/Ta d'une épaisseur Te du caoutchouc de chaque paroi latérale à une position dans laquelle une largeur du pneu est maximale sur une épaisseur Ta du caoutchouc de la bande de roulement à son centre est supérieur ou égal à 0,12 et inférieur ou égal à 0,28, et
un rapport Te/Tf de l'épaisseur Te sur une épaisseur Tf d'un caoutchouc de chaque coussin de jante est supérieur ou égal à 0,35 et inférieur ou égal à 0,65.

2. Pneu selon la revendication 1, dans lequel
un rapport Te/Ti de l'épaisseur Te sur une épaisseur Ti des caoutchoucs au niveau de chaque partie de contrefort est supérieur ou égal à 0,17 et inférieur ou égal à 0,37,
un rapport Ti/Ti1 de l'épaisseur Ti sur une épaisseur Ti1 du caoutchouc réticulé de chaque paroi latérale à l'épaisseur Ti est supérieur ou égal à 2,8 et inférieur ou égal à 5,2, et
un rapport Ti/Tf de l'épaisseur Ti sur l'épaisseur Tf est supérieur ou égal à 1,35 et inférieur ou égal à 2,35.

3. Pneu selon la revendication 1 ou 2, dans lequel une ceinture (16) est stratifiée à l'extérieur de la carcasse dans la direction radiale,
une extrémité intérieure (Ps), dans la direction axiale, de chaque paroi latérale est située entre la ceinture et la carcasse,
chaque talon comporte un tringle (32) et un bourrage sur tringle (34) s'étendant à partir du tringle vers l'extérieur dans la direction radiale,
un rapport Hb/Hc d'une hauteur Hb à partir d'une ligne de base de talon (BL) vers une extrémité extérieure (Pb), dans la direction radiale, de chaque bourrage sur tringle sur une hauteur Hc à un plan équatorial (CL) à partir de la ligne de base de talon vers la carcasse est supérieur ou égal à 0,28 et inférieur ou égal à 0,58,
un rapport Ws/Wc d'une largeur Ws à partir du plan équatorial vers l'extrémité intérieure de chaque paroi latérale sur une largeur maximale Wc de la carcasse est supérieur ou égal à 0,41 et inférieur ou égal à 0,71, et
un rapport Wt/Wc d'une largeur Wt à partir du plan équatorial vers chaque extrémité extérieure (Pt), dans la direction axiale, de la bande de roulement sur la largeur maximale Wc de la carcasse est supérieur ou égal à 0,7 et inférieur ou égal à 1,0.

4. Pneu selon l'une quelconque des revendications 1 à 3, dans lequel l'épaisseur Te est supérieure ou égale à 1,0 mm et inférieure ou égale à 3,0 mm.
